Europäisches Patentamt

European Patent Office

Office européen des brevets

(19)

(11) Publication number: **0 274 170 B1**

(12) **EUROPEAN PATENT SPECIFICATION**

(45) Date of publication of patent specification: **02.10.91** (51) Int. Cl.⁵: **F16G 11/00**

(21) Application number: **87300078.0**

(22) Date of filing: **07.01.87**

(54) Fastener for a lace or rope or the like.

(43) Date of publication of application:
**13.07.88 Bulletin 88/28**

(45) Publication of the grant of the patent:
**02.10.91 Bulletin 91/40**

(84) Designated Contracting States:
**AT BE CH DE ES FR GB GR IT LI LU NL SE**

(56) References cited:
| | |
|---|---|
| EP-A- 0 053 315 | CH-A- 83 611 |
| CH-A- 207 818 | FR-A- 320 604 |
| FR-A- 477 197 | US-A- 621 734 |
| US-A- 730 031 | US-A- 1 215 708 |
| US-A- 1 247 479 | US-A- 4 648 159 |

(73) Proprietor: **Dougherty, John F.**
**3112 Castlevale Road**
**Yakima Washington 98902(US)**

(72) Inventor: **Dougherty, John F.**
**3112 Castlevale Road**
**Yakima Washington 98902(US)**

(74) Representative: **Newby, Martin John et al**
**J.Y. & G.W. Johnson Furnival House 14-18**
**High Holborn**
**London WC1V 6DE(GB)**

## Description

This invention relates generally to fasteners and more specifically to fasteners which removably secure a lace or rope or the like in a position to prevent movement thereof.

Among the many fastening systems that are available at the present time, the primary fastener still remains the use of a line such as a string, twine, rope and the like. The following are illustrations of some of the uses of such a line for fastening systems which are applicable to the present invention.

1. The line may be linked to another line which is already secured in an established position.

2. The line may be linked to another line to form a longer line.

3. Any number of lines may be linked in a certain manner to form netting.

4. The line may be linked to itself so as to form an enclosure for holding articles together.

5. The line may be linked to itself so as to form an enclosure securing another enclosure such as a box or a package.

6. The line may be used in conjunction with lace hooks to fasten various objects such as shoes or boots.

7. The line may be used in conjunction with a dead-man to secure a boat or in conjunction with a tie down to secure a load on a truck.

These and other functions commonly involve the tieing of knots which obviously requires a certain amount of time and, in some cases, requires particular learning skills. The system of the present invention offers advantages of simplification in that it eliminates the need to tie knots while accomplishing the same results in less time and without requiring any particular skill.

U.S.-A-730,031, (Leopold) presents an alternative to the above discussed methods of lacing.

US-A-730,031 discloses a generally non-flexible metal hook with some additional type of material secured therein so as to provide a reduced area at the outer ends thereof with a centrally embedded spike. This device is intended to penetrate the lace and hold it in position.

Devices in accordance with the above-noted patent are cumbersome in that they present the problem of manufacture wherein each individual hook terminates in a stud or the like and each stud is deformed in a piece of supporting material on opposite sides of an opening. Since the hooks are metal, there is very little or no flexibility and the unlacing is inhibited due to that fact.

Applicant is aware of FR-A-320604 which discloses a base supporting a line of fasteners none of which incorporates an internal spike.

Accordingly, one aim of this invention is to provide a device for removably securing a lace or the like having a substantially flat base with at least one fastener integral therewith.

A further aim of the invention is to provide a fasteners having a flat base with a wall flexibly secured thereto terminating in a lip and a spike embedded between the wall and the base and extending toward the lip.

A further aim of this invention is to provide an integrally molded strip with a plurality of fasteners integral therewith, each of said fasteners having a wall flexibly interconnected to the base and a spike or the like embedded in the base and extending toward the opening created by the wall and the base. What constitutes the invention is defined in the following claim 1, the pre-characterising part of which is based on the disclosure of US-A-730031.

These and other aims of the invention will become apparent from the following description when taken together with the accompanying drawings, in which :-

Fig. 1 is a perspective view of a basic type of fastener of the present invention;

Fig. 2 is a side elevation view of the fastener of Fig. 1 showing a lace passing into position within the fastener;

Fig. 3 is a partial sectional view of a modified version of the fastener of the present invention;

Fig. 4 is a perspective view of a further modification of the fastener of the present invention;

Fig. 5 is a perspective view of another modification of the fastener of the present invention;

Fig. 6 is a perspective view of a further modification of the fastener of the present invention;

Fig. 7 is a perspective view of the fastener of Fig. 6 as used in a particular environment;

Fig. 8 is a perspective view of a fastener of the present invention together with a base which may be sewn;

Fig. 9 is a front view of a fastener of Fig. 8;

Fig. l0 is a side elevation view of a further modification of the present invention;

Fig. ll is a perspective view illustrating one of the uses of the fastener of Fig. l0;

Figs. l2, l3 and l4 illustrate various configurations of the retaining means within the fastener;

Fig. l5 is a side elevation view of a modified retaining means;

Fig. l6 is a side elevation view of a further modification of the fastener having two fastening devices extending from a base;

Fig. l7 is a perspective view illustrating one of the uses of the fastener of Fig. l6;

Fig. l8 is a perspective view of a further modification of the fastener having a base and three fasteners;

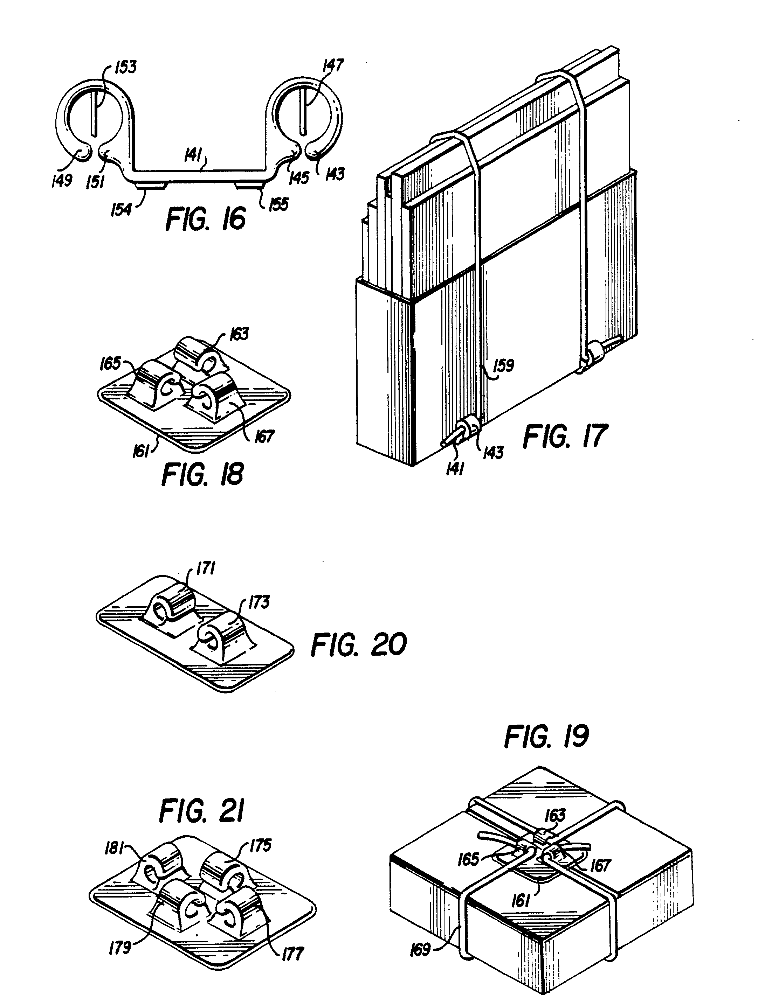

Fig.19 is a perspective view illustrating one of the uses of the fastener of Fig.18;

Figs. 20 and 21 are perspective views of further modifications of the fastener of Fig. 18;

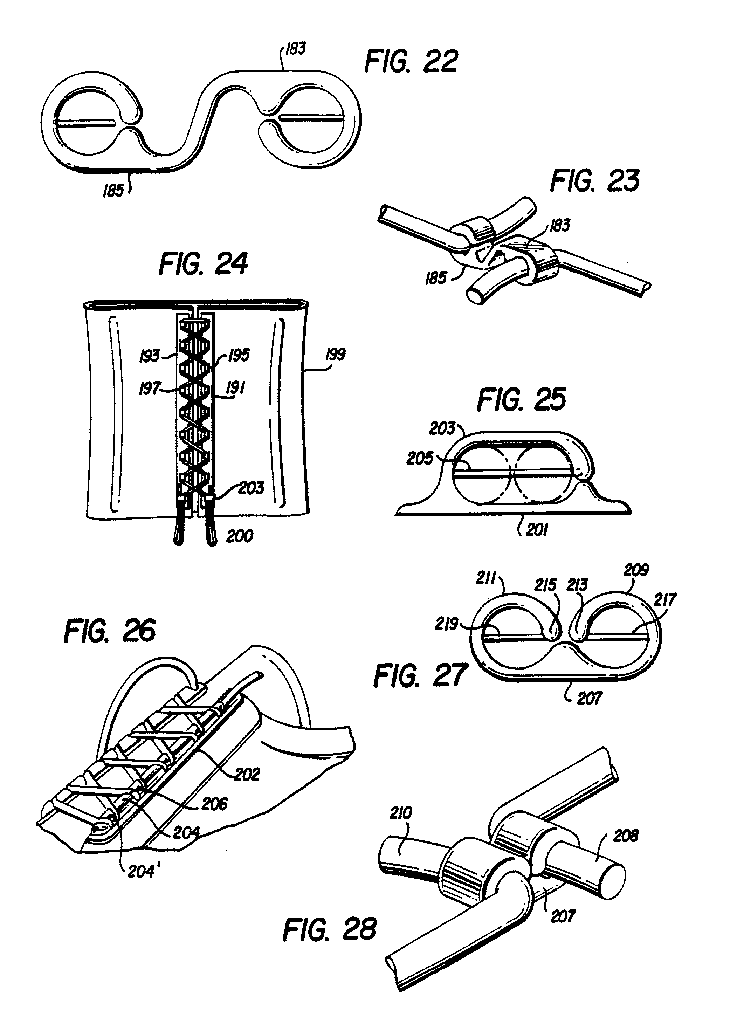

Fig.22 is a side elevation view of a further modification illustrating two fasteners integrally joined;

Fig.23 is a perspective view illustrating one of the uses of the fastener of Fig. 22;

Fig.24 is a perspective view of the use of a strip including a plurality of fasteners as used with a garment;

Fig.25 is a side elevation view of a further modification illustrating an enlarged fastener which accepts two laces;

Fig.26 is a perspective view of a further modification of the fastener.

Fig.27 is a side elevation view of a further modification of the fastener of the present invention showing opposed fasteners extending from a base; and

Fig.28 is a perspective view illustrating the use of the fastener of Fig. 27;

The present invention provides a device for removably securing a line or the like, said device having a base with at least one fastener integral therewith. The fastener has at least one wall extending outwardly therefrom and is, effectively, flexibly secured to the base with the wall terminating in a lip. In one configuration, the base has a ridge opposite the lip with the ridge and lip being substantially adjacent each other and a spike or serrated member which is secured within the fastener and extends in the direction of the lip and the ridge so that a lace or the like may be forced past the lip and ridge and be impaled by the spike, thereby retaining the lace in a fixed position. In a modification of the present invention, one or more walls may extend from the base with each wall terminating in a lip in opposed positions. Thus, the lips of the wall form the opening instead of the lip and ridge of the wall and base. The various modifications of the device are multifunctional in application.

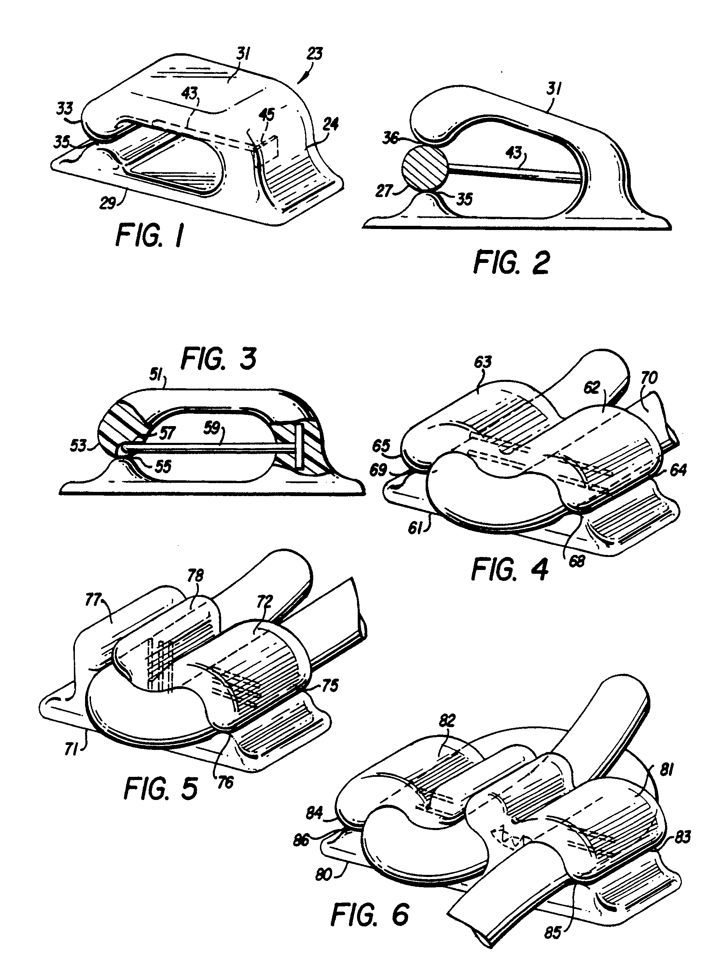

Turning now to the drawings, there is shown in Fig. 1 a perspective view of one of the embodiments of the fastener 23 of the present invention. Base 29 has extending thereabove upper wall 31 with vertical wall 24 providing an interconnection therebetween. Since the entire fastener is integrally molded from a resilient flexible plastic material (eg a material with memory), wall 24 effectively attaches upper wall 31 flexibly to the base 29 so as to allow wall 31 to be moved in an upwardly and downwardly position. One such plastic is Delrin® which is a Dupont product.

Wall 31 terminates in a downwardly extending lip 33 and base 29 has an upwardly extending ridge 35 opposite lip 33. The lip and ridge are preferably of a dimension so as to be substantially adjacent each other there by providing a closed area at the forward part of the fastener.

Spike 43, preferably of metal, is embedded at its base 45 within vertical wall 24. Spike 43 extends in a direction towards lip 33 and ridge 35. As can be seen from Fig. 2, wherein lace 27 is shown in a position passing between lip 33 and ridge 35, wall 3l is raised by the lace so as to allow the lace to pass between the lip and the ridge and be impaled by spike 43. After the lace is impaled on the spike, the memory of the plastic returns the lip and ridge to the position shown in Fig. I. Removal of the lace reverses the sequence.

With this configuration, lace 27 can be quickly secured with the fastener. Further, it can be quickly removed from the fastener by merely lifting upwardly and outwardly thereby releasing the lace from the spike.

Fig. 3 is a partial cross-sectional view of a modification of the fastener of Fig. 2 wherein upper wall 5l terminates in lip 53 opposite ridge 55 as in Fig. I. However, in this modification, a groove 57 is formed in the inner part of lip 53 and spike 59 extends outwardly so as to rest within groove 57. This provides a protective sheath for spike 59 since it is not exposed unless and until a lace is forced between lip 53 and ridge 55, raising lip 53 so as to allow the lace to be impaled on the spike. When the lace has entered the interior of the fastener, lip 53 will resume the position shown in Fig. 3, thus preventing any unwanted human contact with spike 59.

Turning now to Fig. 4, there is shown a further modification of the fastener of the present invention wherein base 6l incorporates two walls 62 and 63 extending in opposite directions, terminating in lips 64 and 65 with wall 6l having mating ridges 68 and 69. Additionally, there is shown the use of two spikes rather than one. When these spikes are used, they should be substantially parallel to each other and extend in the direction of the opening created by the lips and the ridge. This type of fastener may be used as as illustrated for securing the terminal end of rope 70.

Fig. 5 discloses a further modification of a fastener of the present invention wherein base 7l has one fastener including one wall 72 extending in a manner parallel to the base and terminating in a lip 75, mating with ridge 76, and a further fastener having upstanding walls extending basically vertically from base 7l and terminating in mating lips 77 and 78. This type of fastener may be used for securing the end of a rope or the like as illustrated in Fig. 4.

Fig. 6 is yet a further modification of the fastener of the present invention wherein base 80 has two upper walls 8l and 82 terminating in lips 83 and 84 and mating with ridges 85 and 86 in much the same fashion as in Fig. 4. However, a double walled enclosure extends upwardly between the two fasteners. This walled structure does not have any piercing means therein. However, it does include parallel ridges for retaining the end of the rope. These ridges are sufficient for holding the end of the rope since no substantial pressure is exerted at that point.

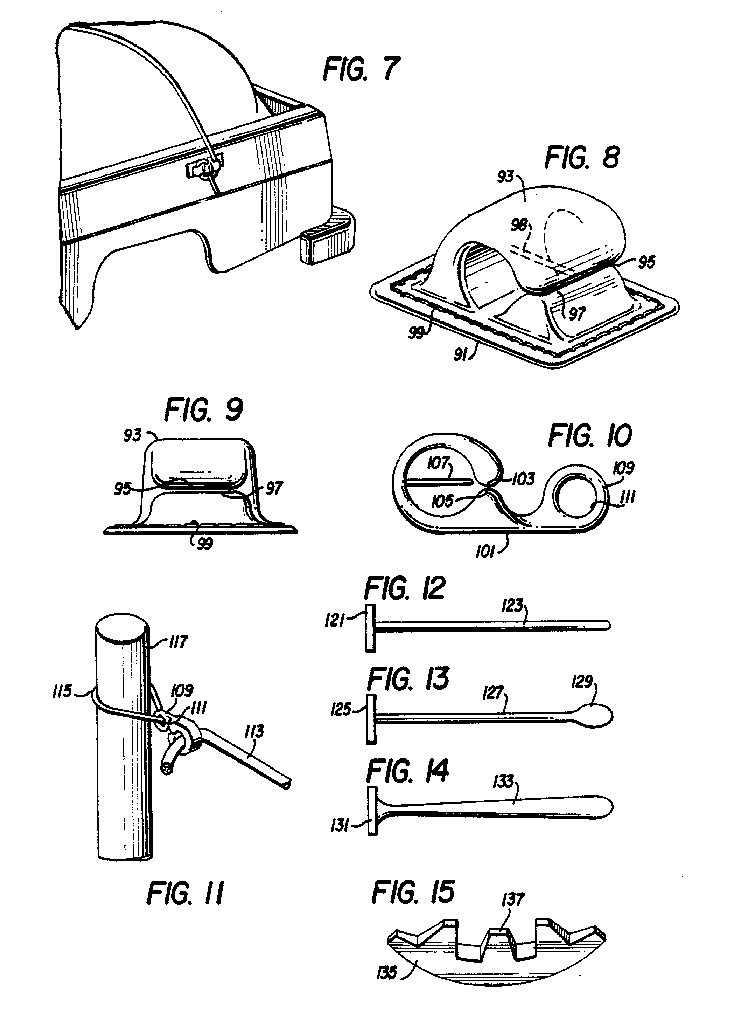

Fig. 7 illustrates one use of the fastener of Fig. 6 wherein it is secured to the side panels of a pickup truck by any well known means so that a load may be secured to the bed of the truck.

Turning now to Fig. 8, there is shown a further modification of the present invention wherein a base 91 includes integral upper wall 93 extending thereabove and terminating in lip 95 which mates with ridge 97 similar to that of Fig. 1. Again, spike 98 extends outwardly from the inner part of a fastener in the direction of the lip and ridge. As illustrated in this figure and in Fig. 9, lip 95 and ridge 97 may be substantially adjacent each other and, preferably, actually touch. This reduces the possibility of the lip accidentally hooking any foreign object. This is permissible due to the flexibility and memory of the upper wall 93 and the intermediate vertical wall as discussed hereinabove. In the particular configuration of Fig. 8, the base is designed with a thin flange so as to permit it to be sewn on material by stitching 99 or, if so desired, the same broad bases provides an adequate area for attachment to an article using adhesives.

Fig. 10 shows a further modification of the fastener of the present invention wherein base 101 has an upper wall terminating in lip 103 mating with the ridge 105 on the base and spike 107 extending from the inner part of the fastener as discussed hereinabove. The opposite end of the base terminates in a flange 109 having a borehole 111 therethrough.

Fig. 11 illustrates one usage of the fastener of Fig. 10 wherein the flange 109 has a ring 115 passing therethrough so it may be passed over a post 117. In this manner, rope 113 may be passed between the lip and the ridge and impaled by the spikes so as to retain the end of the rope in the position as shown.

Figs. 12 through 14 illustrate various preferred enlarged configurations of the spike or retaining means. Fig. 12 discloses a base 121 having a spike of substantially constant dimensions extending outwardly therefrom. Fig. 13 shows a base 125 having a spike 127 extending outwardly therefrom with an enlarged end 129 which aids in retaining the lace or the like in place. Fig. 14 shows base 131 having a spike 113 extending outwardly therefrom with the geometrical configuration of the spike increasing in cross-sectional area as it approaches the outer end of the spike.

Fig. 15 shows a base 135 being serrated so as to have flattened teeth 137 extending therefrom so as to retain the lace within the fastener. A use for this type of gripping device has been illustrated in Fig. 6.

Fig. 16 shows a further modification of the present invention wherein a base 141 has an upstanding fastener extending from both ends. The fasteners terminate in lip 143 and 149 which mate with ridges 145 and 151 on the vertical part of the base. Additionally, each fastener has spikes 147 and 153 contained therein. The base may also have integral legs 154 and 155.

Fig. 17 shows one use of the fastener 118 wherein a box having various items contained therein uses ropes 159 to maintain the items in the box. Since the fasteners are connected by base 141, made of flexible plastic, the device may be used for boxes having widths up to the dimension of the distance between the two fasteners.

Fig. 18 discloses a further modification of the present invention wherein a base 161 includes three fasteners extending upwardly therefrom with two of the fasteners 163 and 165 being in opposing configuration and the third fastener 167 facing those two fasteners but being removed by 90°.

Fig. 19 discloses how such a device may be used for securing a package by placing the base on one of the faces of the package and securing the line as disclosed. The base may have some adhesive to hold it in place on the box while the rope is being secured.

Fig. 20 discloses a modification of Fig. 18 where two fasteners 171 and 173 extend from the base in opposed fashion.

Fig. 21 discloses a further modification of the fastener of Fig. 18 wherein four fasteners are used all facing each other and spaced about the base at approximately 90° intervals. Either Figs. 20 or 21 could be used in a manner similar to that illustrated in Fig. 19 as well as for other purposes.

Fig. 22 discloses a further modification of the present invention wherein two fasteners have an integral base including sections 183 and 185 with the fasteners facing in opposite directions. Each of the fasteners has a spike extending from the inner part as described hereinabove.

Fig. 23 illustrates one usage of the fastener of Fig. 22 wherein, as can be seen, the fastener provides for the securing of the ends of two different ropes or the ends of a single rope.

Fig. 24 illustrates a further usage of the fastener of the present invention wherein two strips 191 and 193, having a plurality of fasteners 195 and 197 are secured to the edges of wearing apparel for interconnection by a lace. Such a garment may be a back brace 199 which may be secured with varying tension levels according to individual need by the lacing method using lace 200. Fastener 203, of the type discussed relative to Fig. 25 may be used to secure the ends of lace 200.

Fig. 25 illustrates a further modification of the present invention wherein base 201 has a lengthened upper wall 203 extending therefrom with a lengthened spike 205 so as to accommodate a double lace with the spike penetrating both laces as previously indicated, one example of the use of this fastener is shown in Fig. 24.

Fig. 26 illustrates a further embodiment of the present invention which may be used with a shoe. A substantially smooth elongated base 202 having a substantially smooth profile includes angular channels 206 extending through the upper wall so as to provide a plurality of upper walls 204 and 204' similar to those discussed hereinabove. Walls 204' form fasteners which include lace penetrating means (not shown) so that the shoe may be laced as illustrated. These fasteners are flexible so that the shoe may be easily laced and unlaced.

Fig. 27 discloses a further modification of a fastener of the present invention wherein base 207, two upper walls 209 and 211 extending thereabove terminating in lips 213 and 215 which are in opposing configuration. Both lips extending above the associated ridge on the base with each having associated spikes 217 and 219. As shown in Fig.28, this type of fastener may also be used to connect the ends of two separate lines 208 and 210, or the ends of the same line.

The following advantages are now apparent from the above description and drawings.

The function of linking one line into the position established by another fastener is illustrated in Fig.11 where the opening 111 secures the fastener to the established link. Another line 113 can swiftly be attached and detached at the other end of the fastener. Such fastener could be used in a gymnasium situation where successive groups of players bring their own nets attaching and detaching them to the established fasteners in turn.

The function of linking line to line as illustrated in Fig. 23, could be used if, for example, a common clothes line were cut or broken in its mid section. Ordinarily, it would be necessary to untie the line at either end to free enough line to allow the tying of a knot reuniting the broken halves. If there were no line to spare, it would be necessary to replace the entire line. However, through the use of the fastener of Fig. 23, the line could be repaired without untying or tying anything and the exact tension desired reestablished in seconds, a fraction of the time by any other solution and without the expense of a new line.

The fastener of Fig. 16 may be used with a single line to form an enclosure for holding articles together. Fig. 17 illustrates two such fasteners in use.

The three configurations of the fastener disclosed in Figs. 18, 20 and 21 may be used with a line to secure a container or the like. Fig. 19 illustrates a box or package thus secured. The method most commonly used today to secure a box with a line ideally requires three hands, the third hand to prevent movement of the line and loss of tension while the other two hands knot the line. Through the use of such fasteners as illustrated, especially if they were provided with "stick-on" bottoms, a line could secure a box quickly, easily and with only one hand.

The most commonly used system for fastening footware comprises laces and eyelets, but this system has some well known drawbacks. For example, a considerable amount of time is generally required for the lacing and unlacing process. After lacing, more time is often required to tighten the different levels to achieve a desirable tension and, finally, knotting is necessary to maintain such tension insofar as possible. In untying, the knot must be undone so that the tension is released enough to allow the withdrawal of the foot. This usually requires that the lace be completely taken out of the upper levels of eyelets. Even more time is required when the lace must be completely removed for washing or to allow the cleaning and polishing of the footware. When lace ends are frayed, the lacing process becomes almost impossible. Further, although it might be possible to establish a comfortable tension at every lacing level during the lacing process, it cannot be maintained during use since the lace moves between eyelets in response to pressure from the foot or leg. This very common problem leads countless boot and shoe users to leave the upper levels of lacing eyelets unused, thus losing the intended support in that area. Countless others suffer varying degrees of pain and discomfort in order to obtain the full support of their footware. Still others, despairing of finding the style of footware they want with the comfort they require, restrict their activities or press unsuitable footware into unintended uses, like wearing western boots for climbing hills.

A less commonly used alternative lacing system makes use of metal hooks. This system allows quick and easy installation and removal of a lace but it has serious drawbacks. Because the hooks protrude well above the surface of the footware and because they are made of hard metal formed like a hook open on three sides, they are a constant hazard to snare any foreign object such as a pant leg, table cloth or another lace, hence they can cause tearing and tripping. Additionally, if brought into contact with furniture or painted surfaces, they can cause pitting or scratching. Further, if any force is brought against the lacing area of such footware, the protruding hard metal hooks will intercept it and transfer it directly to the foot or leg with consequent pain and possible injury. Attempting to minimize this hazard adds bulk, weight and cost to footware. Todays lace hooks are manufactured singly, one at a time and must be handled, positioned and attached one at a time; such labor-intensive work necessarily adds notably to cost. Further, protruding, angular metal hooks cannot be blended stylistically with a smooth leather finish. As with the eyelet system, systems using lace hooks as manufactured today, offer no tension control of the lace since it moves between hooks in response to pressure from foot or leg rather than in response to the requirements of comfort.

The system as illustrated in Fig. 26 elminates every single problem encountered in the lacing systems discussed above. Swift and easy lacing is simultaneous with establishing the desired tension at each lacing level. Once set, the tension cannot alter, so that maximum comfort is achieved and maintained until the footware is removed. Unlacing is swift and easy. Since the lace need not pass through narrow eyelets, frayed lace ends are of no connsequence. Force brought against the lacing area is now even less dangerous than with the eyelet system since the broad based flexible lacing strips as shown will absorb and distribute it. These strips may be strong and lightweight, which are easily and inexpensively produced with automatic equipment. Further, the streamlined design, low profile and closed mouths of the fasteners present no hazard to extraneous objects. Finally, being plastic, the lacing strips of Fig. 26 can be produced with any color and finish, thus lending themselves to easy stylistic blending with any footware. Also the fasteners could include a soft plastic layer on the outer surface thereof if a more gentle surface is needed or required.

Referring to Figs. 4, 5 and 6, the precise combination of fasteners to be chosen depends, of course, on the particular purpose to be served and the composition of the rope being used. Ordinarily, when mooring a boat or stabilizing a load on a small truck, ropes are fixed to some type of cleat by the tying of knots. Care and skill are required lest a poorly knotted rope release and a valuable boat or load be lost. A knot improperly tied might also be very difficult to untie, leading to frustration and lost time.

The fasteners of Figs. 4, 5 and 6 allow the almost instantaneous secure attachment of a rope with the simultaneous establishment of any desired tension. Referring to Fig. 7, the rope need simply be drawn to the desired tension alongside the mouth of either the fastener on the right or left, then, while maintaining that tension the rope is moved sideways through the mouth of the fastener and into its body where it is impaled on the spikes. The hands now no longer need to grip the rope with any particular force, but can, in an easy manner, rotate the free portion of the rope and attach it to the opposite fastener without leaving any slack. The rope is now doubly secured and the loose end can be looped in any fashion then fixed in the central retainer, thus presenting a neat, finished appearance. Of course, any later tightening that might become necessary can be accomplished with equal ease. Removal of the rope requires the simple reversal of the procedure.

## Claims

1. A device for removably securing a lace or the like comprising a substantially flat base (29; 61; 71; 80; 91; 101; 141; 161; 183, 185; 201; 207) and at least one fastener (23; 163. 165, 167; 171, 173; 175, 179, 177, 181) integral with and extending outwardly from said base, the or each fastener comprising an upper wall (31; 51; 62, 63; 72; 81; 93; 203; 209, 211), connection means (24) integral with said wall and said base for interconnecting said wall to said base, a lip (33; 53; 64, 65; 75; 83, 84; 95; 103; 143, 149; 213, 215) at the terminal end of said upper wall extending toward said base, a ridge (35; 55; 68, 69; 76; 85, 86; 97; 105; 145, 151) integrally extending from said base opposite said lip so that said lip and ridge are normally positioned closely adjacent each other, passage of a lace between the lip and ridge affording entry of a lace to, or exit of a lace from, a lace-receiving cavity being defined between said base, upper wall, connection means, lip and ridge, and at least one lace penetrating means (43; 59; 98; 107; 147; 153; 205; 217, 219) secured within said connection means (24) and extending across said lace-receiving cavity toward said lip, the dimension of said lace-receiving cavity being such as to accommodate circular-section laces up to a given maximum diameter, characterised in that said base, connection means (24), upper wall, lip and ridge of each fastener are integrally molded from a resilient flexible plastic material whereby the lip and ridge are resiliently movable the said given diameter apart to permit passage therebetween of a circular section lace having said given maximum diameter into or out of said lace-receiving cavity.

2. The device of claim 1, characterised in that said lace penetrating means comprises a spike (43; 59; 98; 107; 147, 153; 205; 217, 219).

3. The device of claim 1, characterised in that said lace penetrating means comprises a plurality of spikes (43; 59; 98; 107; 147, 153; 205; 217, 219).

4. The device of claim 1 or claim 2, characterised in that a slot (57) is provided in the inner wall of said lip (53) and in that said penetrating means (59) is of a length such that the end thereof mates with said slot (57).

5. The device of any preceding claim, characterised in that said lip (33; 53; 64, 65; 75; 83, 84; 95; 103; 143. 149; 213, 215) and said ridge (35; 55; 68, 69; 76; 85, 86; 97; 105; 145, 151) are normally in contact.

6. The device of claim 1, characterised in that a plurality of said fasteners (195, 197) are provided integral with and extending above said base (61; 80; 141; 191, 193; 202).

7. The device of any preceding claim, characterised in that a preselected number of said fasteners include a lace retaining means (135) in addition to said lace penetrating means.

8. The device of claim 1, characterised in that said fastener comprises a plurality of lace penetrating means secured within said means integral with said wall.

9. The device of claim 6, characterised in that two adjacent fasteners (163, 165; 171, 173) are secured to said base (80; 161) and extend in substantially opposite directions.

10. The device of claim 1, characterised in that a second fastener is provided having parallel walls extending upwardly from said base (71) with each wall terminating in lips (77, 78) adjacent each other; and at least one lace penetrating means in said second fastener.

11. The device of claim 1, characterised in that a second fastener (82, 84, 86) is provided facing in the opposite direction from said one fastener (81, 83, 85); lace penetrating means in said second fastener; a third fastener between said one fastener and said second fastener said third fastener comprising parallel walls extending upwardly from said base (80) with each wall terminating in a lip adjacent each other; and lace retaining means secured within said third fastener.

12. The device of claim 1, characterised in that a flange is provided integral with said base (91) and extending about the periphery thereof.

13. The device of any preceding claim, characterised in that said lace penetrating means comprises a spike (123) having a substantially uniform cross-sectional area between the base (121) and tip thereof.

14. The device of any of claims 1 to 12, characterised in that said lace penetrating means comprises a spike (127) having an increased cross-sectional area (129) at the tip thereof.

15. The device of any of claims 1 to 12, characterised in that said lace penetrating means comprises a spike (133) having a gradually increasing cross-sectional area between the base (131) and the tip thereof.

16. The device of claim 1, characterised in that said base (141) is U-shaped with a fastener extending outwardly from the legs of said U-shape.

17. The device of claim 1, characterised in that a second fastener (165; 173; 175) is provided integral with said base (161) said second fastener facing said one fastener (163; 171; 179).

18. The device of claim 17, characterised in that a third fastener (167; 177) is provided which is integral with said base (161) and is spaced from and facing said one (163; 179) and said second (165; 175) fastener.

19. The device of claim 18, characterised in that a fourth fastener (181) is integral with said base spaced from and facing said one (175) and said second (179) fasteners opposite to said third (177) fastener.

20. The device of claim 1, characterised in that said upper wall (203) is elongated so as to increase the base area covered thereby.

21. The device of claim 1, characterised in that said base comprises an elongated base (202) having a substantially smooth profile; angular channels (206) extending through said upper wall so as to provide a plurality of upper walls (204, 204'); and lace penetrating means associated with at least alternate walls.

22. A device as claimed in claim 1, characterised in that a second fastener having parallel walls is provided extending upwardly from said fastener with each wall terminating in lips adjacent each other; and at least one lace penetrating means is located in said second fastener.

**23.** A device as claimed in claim 22, <u>characterised</u> <u>in that</u> said second fastener faces in the op<u>posite</u> direction from said one fastener; and there is a third fastener between said one fastener and said second fastener, said third fastener comprising parallel walls extending upwardly from said fastener with each wall terminating in a lip adjacent each other; and lace retaining means secured within said third fastener.

## Revendications

**1.** Dispositif pour fixer de manière détachable un cordon ou analogue, comprenant une base substantiellement plane (29; 61; 71; 80; 91; 101; 141; 161; 183, 185; 201; 207) et au moins une attache (23; 163, 165, 167; 171, 173; 175, 177, 179, 181) intégrée à et formée en relief sur ladite base, la ou chaque attache comportant une paroi supérieure (31; 51; 62, 63; 72; 81; 93; 203; 209, 211), des moyens de liaison (24) intégrés à ladite paroi et à ladite base pour relier ladite paroi à ladite base, une lèvre (33; 53; 64, 65; 75; 83, 84; 95; 103; 143; 149; 213, 215) s'étendant en direction de ladite base, à l'extrémité terminale de ladite paroi supérieure, un bourrelet (35; 55; 68, 69; 76; 85, 86; 97; 105; 145, 151) s'étendant intégralement à partir de ladite base en face de ladite lèvre de telle sorte que ladite lèvre et ledit bourrelet soient normalement placés au voisinage immédiat l'un de l'autre, un passage d'un cordon entre la lèvre et le bourrelet permettant l'entrée d'un cordon vers, ou la sortie d'un cordon hors d'une cavité de réception de cordon qui est définie entre ladite base, ladite paroi supérieure, lesdits moyens de liaison, ladite lèvre et ledit bourrelet, et au moins un moyen de pénétration dans le cordon (43; 59; 98; 107; 147; 153; 205; 217, 219) fixé à l'intérieur desdits moyens de liaison (24) et s'étendant en travers de ladite cavité de réception de cordon en direction de ladite lèvre, la dimension de ladite cavité de réception de cordon étant telle qu'elle puisse accueillir des cordons de section circulaire jusqu'à un diamètre maximum donné, caractérisé en ce que ladite base, lesdits moyens de liaison (24), ladite paroi supérieure, ladite lèvre et ledit bourrelet de chaque attache sont moulés d'une seule pièce en une matière plastique souple élastique de sorte que ladite lèvre et ledit bourrelet peuvent s'écarter élastiquement l'un de l'autre dudit diamètre donné pour permettre le passage entre eux d'un cordon de section circulaire ayant ledit diamètre maximum donné, vers l'intérieur ou vers l'extérieur de ladite cavité de réception de cordon.

**2.** Dispositif suivant la revendication 1, caractérisé en ce que lesdits moyens de pénétration dans le cordon comprennent un clou (43; 59; 98; 107; 147, 153; 205; 217, 219).

**3.** Dispositif suivant la revendication 1, caractérisé en ce que lesdits moyens de pénétration dans le cordon comprennent une pluralité de clous (43; 59; 98; 107; 147, 153; 205; 217, 219).

**4.** Dispositif suivant la revendication 1 ou la revendication 2, caractérisé en ce qu'il est prévu une encoche (57) dans la paroi interne de ladite lèvre (53) et en ce que lesdits moyens de pénétration (59) ont une longueur telle que leur extrémité s'adapte dans ladite encoche (57).

**5.** Dispositif suivant l'une ou l'autre des revendications précédentes, caractérisé en ce que ladite lèvre (33; 53; 64, 65; 75; 83, 84; 95; 103; 143, 149; 213, 215) et ledit bourrelet (35; 55; 68, 69; 76; 85, 86; 97; 105; 145, 151) sont normalement en contact.

**6.** Dispositif suivant la revendication 1, caractérisé en ce qu'il est prévu une pluralité desdites attaches (195, 197) intégrées à et en relief au-dessus de ladite base (61; 80; 141; 191, 193; 202).

**7.** Dispositif suivant l'une ou l'autre des revendications précédentes, caractérisé en ce qu'un nombre présélectionné desdites attaches comprennent des moyens de retenue de cordon (135) en plus desdits moyens de pénétration dans le cordon.

**8.** Dispositif suivant la revendication 1, caractérisé en ce que ladite attache comprend une pluralité de moyens de pénétration dans le cordon fixés à l'intérieur desdits moyens intégrés à ladite paroi.

**9.** Dispositif suivant la revendication 6, caractérisé en ce que deux attaches adjacentes (163, 165; 171, 173) sont fixées à ladite base (80; 161) et sont orientées dans des directions substantiellement opposées.

**10.** Dispositif suivant la revendication 1, caractérisé en ce qu'il est prévu une seconde attache ayant des parois parallèles qui s'étendent vers le haut à partir de ladite base (71), chaque paroi se terminant par des lèvres (77, 78) adjacentes l'une à l'autre; et au moins un moyen de pénétration dans le cordon dans ladite seconde attache.

11. Dispositif suivant la revendication 1, caractérisé en ce qu'il est prévu une deuxième attache (82, 84, 86) orientée en direction opposée par rapport à ladite première attache (81, 83, 85); des moyens de pénétration dans le cordon dans ladite deuxième attache; une troisième attache entre ladite première attache et ladite deuxième attache, ladite troisième attache comportant des parois parallèles qui s'étendent vers le haut à partir de ladite base (80), chaque paroi se terminant par une lèvre voisine de l'autre; et des moyens de retenue de cordon fixés à l'intérieur de ladite troisième attache.

12. Dispositif suivant la revendication 1, caractérisé en ce qu'il est prévu une bride intégrée à ladite base (91) et s'étendant sur le pourtour de celle-ci.

13. Dispositif suivant l'une ou l'autre des revendications précédentes, caractérisé en ce que lesdits moyens de pénétration dans le cordon comprennent un clou (123) ayant une section transversale substantiellement uniforme entre sa tête (121) et sa pointe.

14. Dispositif suivant l'une ou l'autre des revendications 1 à 12, caractérisé en ce que lesdits moyens de pénétration dans le cordon comprennent un clou (127) ayant une section transversale (129) agrandie à sa pointe.

15. Dispositif suivant l'une ou l'autre des revendications 1 à 12, caractérisé en ce que lesdits moyens de pénétration dans le cordon comprennent un clou (133) ayant une section transversale qui augmente graduellement entre sa tête (131) et sa pointe.

16. Dispositif suivant la revendication 1, caractérisé en ce que ladite base (141) a un profil en U avec une attache s'étendant vers l'extérieur à partir des branches dudit profil en U.

17. Dispositif suivant la revendication 1, caractérisé en ce qu'il est prévu une deuxième attache (165; 173; 175) intégrée à ladite base (161), ladite deuxième attache faisant face à ladite première attache (163; 171; 179).

18. Dispositif suivant la revendication 17, caractérisé en ce qu'il est prévu une troisième attache (167; 177) qui est intégrée à ladite base (161) et qui est espacée de et fait face à ladite première (163; 179) et à ladite deuxième (165;

175) attaches.

19. Dispositif suivant la revendication 18, caractérisé en ce qu'une quatrième attache (181) est intégrée à ladite base, à distance de et faisant face à ladite première (175) et à ladite deuxième (179) attaches à l'opposé de ladite troisième (177) attache.

20. Dispositif suivant la revendication 1, caractérisé en ce que ladite paroi supérieure (203) est allongée de façon à augmenter la surface de base qu'elle couvre.

21. Dispositif suivant la revendication 1, caractérisé en ce que ladite base comprend une base allongée (202) ayant un profil substantiellement lisse; des canaux angulaires (206) s'étendant à travers ladite paroi supérieure de façon à former une pluralité de parois supérieures (204, 204'); et des moyens de pénétration dans le cordon associés à au moins une paroi sur deux.

22. Dispositif suivant la revendication 1, caractérisé en ce qu'il est prévu une deuxième attache ayant des parois parallèles, qui s'étendent vers le haut à partir de ladite attache, chaque paroi se terminant par des lèvres adjacentes l'une à l'autre; et en ce qu'au moins un moyen de pénétration dans le cordon est situé dans ladite deuxième attache.

23. Dispositif suivant la revendication 22, caractérisé en ce que ladite deuxième attache est orientée dans la direction opposée à ladite première attache; et en ce qu'il y a une troisième attache entre ladite première attache et ladite deuxième attache, ladite troisième attache comportant des parois parallèles qui s'étendent vers le haut à partir de ladite attache, chaque paroi se terminant par une lèvre adjacente à l'autre; ainsi que des moyens de retenue de cordon fixés à l'intérieur de ladite troisième attache.

**Patentansprüche**

1. Einrichtung zum lösbaren Befestigen einer Schnur oder dergleichen, die ein im wesentlichen flaches Unterteil (29; 61; 71; 80; 91; 101; 141; 161; 183; 185; 201; 207) und mindestens eine Befestigungsvorrichtung (23; 163, 165, 167; 171; 173; 175, 179, 177, 181) umfaßt, die mit diesem Unterteil einstückig verbunden ist und sich von diesem nach außen erstreckt, wobei die oder jede Befestigungsvorrichtung eine obere Wand (31; 51; 62, 63; 72; 81; 93;

203; 209, 211), ein Verbindungsmittel (24), das mit jener Wand und jenem Unterteil einstückig verbunden ist, um jene Wand mit jenem Unterteil zu verbinden, eine Lippe (33; 53; 64, 65; 75; 83, 84; 95; 103; 143, 149; 213, 215) an dem sich zu jenem Unterteil erstreckenden Abschlußende jener oberen Wand, einen Steg (35; 55; 68, 69; 76; 85, 86; 97; 105; 145, 151), der sich so gegenüber jener Lippe einstückig von jenem Unterteil erstreckt, daß jene Lippe und jener Steg normalerweise nahe nebeneinander angeordnet sind, wobei der Durchgang einer Schnur zwischen der Lippe und dem Steg, wodurch eine Schnur in eine Schnuraufnahmehöhlung hinein oder eine Schnur aus dieser heraus gelangen kann, zwischen jenem Unterteil, oberen Wand, Verbindungsmittel, Lippe und Steg festgelegt wird, und mindestens ein Schnurdurchdringungsmittel (43; 59; 98; 107; 147; 153; 205; 217, 219) umfaßt, das in jenem Verbindungsmittel (24) befestigt ist und sich über jene Schnuraufnahmehöhlung zu jener Lippe hin erstreckt, wobei jene Schnuraufnahmehöhlung so groß ist, daß sie Schnüre mit kreisförmigem Querschnitt von bis zu einem gegebenen Höchstdurchmesser aufnimmt, dadurch gekennzeichnet, daß jener Unterteil, Verbindungsmittel (24), obere Wand, Lippe und Steg jeder Befestigungsvorrichtung einstückig aus einem elastischen, flexiblen Kunststoffmaterial geformt sind, wodurch die Lippe und der Steg elastisch um jenen gegebenen Durchmesser auseinanderbewegt werden können, so daß eine Schnur mit einem kreisförmigen Durchschnitt, die jenen gegebenen Höchstdurchmesser aufweist, dazwischen hindurch in jene Schnuraufnahmehöhlung hinein oder aus ihr heraus gelangen kann.

2. Einrichtung nach Anspruch 1, dadurch gekennzeichnet, daß jenes Schnurdurchdringungsmittel einen Dorn (43; 59; 98; 107; 147, 153; 205; 217, 219) umfaßt.

3. Einrichtung nach Anspruch 1, dadurch gekennzeichnet, daß jenes Schnurdurchdringungsmittel eine Vielzahl von Dornen (43; 59; 98; 107; 147, 153; 205; 217, 219) umfaßt.

4. Einrichtung nach Anspruch 1 oder 2, dadurch gekennzeichnet, daß in der Innenwand jener Lippe (53) ein Schlitz (57) vorgesehen ist und daß jenes Schnurdurchdringungsmittel (59) so lang ist, daß sein Ende in jenen Schlitz (57) hineinpaßt.

5. Einrichtung nach einem vorhergehenden Anspruch, dadurch gekennzeichnet, daß sich jene Lippe (33; 53; 64, 65; 75; 83, 84; 95; 103; 143, 149; 213, 215) und jener Steg (35; 55; 68, 69; 76; 85, 86; 97; 105; 145, 151) normalerweise berühren.

6. Einrichtung nach Anspruch 1, dadurch gekennzeichnet, daß eine Vielzahl jener Befestigungsvorrichtungen (195, 197) einstückig mit jenem Unterteil (61; 80; 141; 191, 193; 202) verbunden sind und sich über diesem erstrecken.

7. Einrichtung nach einem vorhergehenden Anspruch, dadurch gekennzeichnet, daß eine vorgewählte Anzahl jener Befestigungsvorrichtungen zusätzlich zu jenem Schnurdurchdringungsmittel ein Schnurhaltemittel (135) umfaßt.

8. Einrichtung nach Anspruch 1, dadurch gekennzeichnet, daß jene Befestigungsvorrichtung eine Vielzahl von Schnurdurchdringungsmitteln umfaßt, die darin, einstückig mit jener Wand verbunden, befestigt sind.

9. Einrichtung nach Anspruch 6, dadurch gekennzeichnet, daß zwei benachbarte Befestigungsvorrichtungen (163, 165; 171, 173) an jenem Unterteil (80; 161) befestigt sind und sich in im wesentlichen gegenüberliegenden Richtungen erstrecken.

10. Einrichtung nach Anspruch 1, dadurch gekennzeichnet, daß eine zweite Befestigungsvorrichtung vorgesehen ist, die sich von jenem Unterteil (71) nach oben erstreckende parallele Wände aufweist, wobei jede Wand in einander benachbarten Lippen (77, 78) endet, wobei mindestens ein Schnurdurchdringungsmittel in jener zweiten Befestigungsvorrichtung vorgesehen ist.

11. Einrichtung nach Anspruch 1, dadurch gekennzeichnet, daß eine zweite Befestigungsvorrichtung (82, 84, 86), die von jener einen Befestigungsvorrichtung (81, 83, 85) aus gesehen, in die entgegengesetzte Richtung gewandt ist, ein Schnurdurchdringungsmittel in jener zweiten Befestigungsvorrichtung, eine dritte Befestigungsvorrichtung zwischen jener einen Befestigungsvorrichtung und jener zweiten Befestigungsvorrichtung, wobei jene dritte Befestigungsvorrichtung sich von jenem Unterteil (80) nach oben erstreckende parallele Wände aufweist, wobei jede Wand in einander benachbarten Lippen endet und ein innerhalb jener dritten Befestigungsvorrichtung befestigtes Schnurhaltemittel vorgesehen sind.

12. Einrichtung nach Anspruch 1, dadurch gekennzeichnet, daß ein Flansch vorgesehen ist, der einstückig mit jenem Unterteil (91) verbunden ist und sich um dessen Umfang erstreckt.

13. Einrichtung nach einem vorhergehenden Anspruch, dadurch gekennzeichnet, daß jenes Schnurdurchdringungsmittel einen Dorn (123) umfaßt, der zwischen seinem Bodenteil (121) und seiner Spitze eine im wesentlichen gleichförmige Querschnittsfläche aufweist.

14. Einrichtung nach einem der Ansprüche 1 bis 12, dadurch gekennzeichnet, daß jenes Schnurdurchdringungsmittel einen Dorn (127) umfaßt, dessen Spitze eine größere Querschnittsfläche (129) aufweist.

15. Einrichtung nach einem der Ansprüche 1 bis 12, dadurch gekennzeichnet, daß jenes Schnurdurchdringungsmittel einen Dorn (133) umfaßt, der zwischen seinem Bodenteil (131) und seiner Spitze eine sich allmählich vergrößernde Querschnittsfläche aufweist.

16. Einrichtung nach Anspruch 1, dadurch gekennzeichnet, daß jenes Unterteil (141) U-förmig ist, wobei sich eine Befestigungsvorrichtung von den Schenkeln jener U-Form nach außen erstreckt.

17. Einrichtung nach Anspruch 1, dadurch gekennzeichnet, daß eine zweite Befestigungsvorrichtung (165; 173; 175) vorgesehen ist, die einstückig mit jenem Unterteil (161) verbunden und jener einen Befestigungsvorrichtung (163; 171; 179) zugewandt ist.

18. Einrichtung nach Anspruch 17, dadurch gekennzeichnet, daß eine dritte Befestigungsvorrichtung (167; 177) vorgesehen ist, die einstückig mit jenem Unterteil (161) verbunden und von jener einen (163; 179) und jener zweiten (165; 175) Befestigungsvorrichtung beabstandet ist und diesen gegenüberliegt.

19. Einrichtung nach Anspruch 18, dadurch gekennzeichnet, daß eine vierte Befestigungsvorrichtung (181) einstückig mit jenem Unterteil verbunden, von jener einen (175) und jener zweiten (179) Befestigungsvorrichtung beabstandet und diesen zugewandt ist und jener dritten (177) Befestigungsvorrichtung gegenüberliegt.

20. Einrichtung nach Anspruch 1, dadurch gekennzeichnet, daß jene obere Wand (203) so länglich gestaltet ist, daß die hiervon überdeckte Fläche vergrößert wird.

21. Einrichtung nach Anspruch 1, dadurch gekennzeichnet, daß jenes Unterteil ein längliches Unterteil (202) mit einem im wesentlichen glatten Profil, Winkelkanäle (206), die sich so durch jene obere Wand erstrecken, daß sich ein Vielzahl von oberen Wänden (204, 204') ergibt, und Schnurdurchdringungsmittel umfaßt, die mindestens abwechselnden Wänden zugeordnet sind.

22. Einrichtung nach Anspruch 1, dadurch gekennzeichnet, daß eine zweite Befestigungsvorrichtung mit parallelen Wänden vorgesehen ist, die sich von jener Befestigungsvorrichtung nach oben erstrecken und jeweils in einander benachbarten Lippen enden, wobei mindestens ein Schnurdurchdringungsmittel in jener zweiten Befestigungsvorrichtung angeordnet ist.

23. Einrichtung nach Anspruch 22, dadurch gekennzeichnet, daß jene zweite Befestigungsvorrichtung, von jener einen Befestigungsvorrichtung aus gesehen, in die entgegengesetzte Richtung gewandt ist, wobei zwischen jener einen Befestigungsvorrichtung und jener zweiten Befestigungsvorrichtung eine dritte Befestigungsvorrichtung liegt, die parallele Wände umfaßt, die sich von jener Befestigungsvorrichtung nach oben erstrecken und jeweils in einander benachbarten Lippen enden, und in jener dritten Befestigungsvorrichtung ein Schnurhaltemittel befestigt ist.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

FIG. 16

FIG. 17

FIG. 18

FIG. 20

FIG. 19

FIG. 21

FIG. 22

FIG. 23

FIG. 24

FIG. 25

FIG. 26

FIG. 27

FIG. 28

15